# EUROPÄISCHE PATENTANMELDUNG

(11) **EP 4 269 058 A1**
(43) Veröffentlichungstag der Anmeldung: **01.11.2023**
(21) Anmeldenummer: 23169942.2
(22) Anmeldetag: 26.04.2023
(51) Int. Cl.: B29C 33/00, B28B 7/00, B28B 7/02, B29C 33/30, B29C 33/32, B29C 39/26, B29C 39/28, B29C 45/26, B29C 45/37

(54) **FORM ZUR HERSTELLUNG VON FORMKÖRPERN UND DEREN VERWENDUNG**

(30) Priorität: 27.04.2022 DE 102022110112
(71) Anmelder: Ucosan BV, 9301 ZR Roden (NL)
(72) Erfinder: Vlieger, René Gerrit, 9401 LX Assen (NL); Radix, Hermanus, 9403 XX Assen (NL); Venema, Jaan Abraham, 8426 AM Appelscha (NL); Krol, Geert Jannes, 9311 VJ Nieuw-Roden (NL)
(74) Vertreter: Meissner Bolte Partnerschaft mbB

(57) **Zusammenfassung**

Die Erfindung betrifft eine Form (10) zur Herstellung von Formkörpern aus einem gieß- und/oder spritzbaren Material,
dadurch gekennzeichnet, dass
die Form (10) modular aufgebaut ist und zumindest einen Hohlraum (20) aufweist, der von wenigstens einem ersten Formteil (30), wenigstens einem zweiten Formteil (40), das dem ersten Formteil (30) im Wesentlichen gegenüberliegend angeordnet ist, und Verbindungsformteilen (50) begrenzt ist, wobei die Verbindungsformteile (50) zwischen dem ersten Formteil (30) und dem zweiten Formteil (40) angeordnet und relativ zueinander versetzbar sind und die Verbindungsformteile (50) und/oder ein in Richtung des Hohlraums (20) an den Verbindungsformteilen (50) angeordnetes Dichtprofil (90) einen jeweiligen Abstand zwischen dem wenigstens einen ersten Formteil (30) und dem wenigstens einen zweiten Formteil (40) definieren , wobei die Form (10) gegebenenfalls wenigstens eine, insbesondere als Platzhalter dienende, Einlagevorrichtung aufweist, die herausnehmbar an dem ersten Formteil (30) und/oder dem zweiten Formteil (30) und/oder wenigstens einen Verbindungsformteil (50) befestigbar ist, sowie ferner eine Verwendung einer solchen Form zum Herstellen von Formkörpern.

## Beschreibung

Die Erfindung betrifft eine Form zur Herstellung von Formkörpern aus einem gieß- und/oder spritzbaren Material gemäß dem Oberbegriff von Patentanspruch 1 sowie eine Verwendung einer solchen Form zur Herstellung von derartigen Formkörpern gemäß dem Oberbegriff von Patentanspruch 15.

Formen zur Herstellung von Formkörpern aus einem gieß- und/oder spritzbaren Material sind seit geraumer Zeit bekannt und dienen üblicherweise zur Aufnahme des gieß- und/oder spritzbaren Materials, wobei diese Formen einen Hohlraum definieren, in welchen das gieß- und/oder spritzbare Material eingefüllt wird, wobei der Hohlraum als Matrize für einen herzustellenden Gegenstand dient.

Als gieß- und/oder spritzbares Material dienen in der Regel Kunststoffe oder mineralische Gussmassen, wobei auch Kombinationen dieser Substanzen, wie beispielsweise gefüllte Kunststoffe, wie beispielsweise Quaryl°, d. h. ein quartzgefülltes Acrylat, verwendet werden können. An dieser Stelle sei darauf hingewiesen, dass unter Kunststoffen in diesem Zusammenhang auch Precursor und Vorstufen zu Kunststoffen, wie beispielsweise deren Monomere, zu verstehen sind, die erst nach dem Einfüllen in die Hohlform polymerisiert und/oder ausgehärtet werden, um auf diese Weise das herzustellende Produkt zu bilden.

Üblicherweise werden für derartige Formbildungsverfahren Formen verwendet, die aus zwei Hälften bestehen, die beispielsweise eine Formhälfte darstellen, die zur Herstellung einer Sichtseite eines herzustellenden Produkts dient, sowie ferner eine weitere Formhälfte darstellen, die zur Herstellung einer Rückseite eines herzustellenden Produkts dient. Diese beiden Formhälften, die beispielsweise in Form von zwei Metallschalen ausgebildet sind, werden im Zuge des Herstellungsverfahrens für das Produkt in der Regel so zusammengefügt, dass die beiden Formhälften gemeinsam den Hohlraum bilden, der im Anschluss als Matrize für den herzustellenden Gegenstand dient.

Ein wesentlicher Nachteil eines derartigen aus dem Stand der Technik bekannten Formgebungsverfahrens besteht indes darin, dass mit einem derartigen Formenwerkzeug, bei welchem der als Matrize dienende Hohlraum aus zwei Formhälften, im Sinne von Halbschalen, gebildet wird, immer nur ein und derselbe Gegenstand hergestellt werden kann. Sobald eine Herstellung eines anderen Gegenstands gewünscht ist, der eine andere Geometrie als der zuvor hergestellte Gegenstand aufweist, ist es gemäß dem Stand der Technik immer notwendig, zunächst ein neues Formenwerkzeug mit anderen Geometrien der beiden Formenhälften herzustellen. Ein solches Vorgehen ist nicht nur teuer und kompliziert, sondern auch aufwendig und mit einem hohen Aufwand, nicht nur in Bezug auf die jeweilige Berechnung der erforderlichen Geometrien, sondern auch im Hinblick auf die zur Herstellung des neuen Formenwerkzeugs notwendigen Werkstoffe, verbunden.

Der Erfindung liegt die Aufgabe zugrunde diese vorgenannten Probleme zu lösen und eine Form, respektive ein Formenwerkzeug, zur Verfügung zu stellen, mit dem es möglich ist, auf einfache und kostengünstige Weise unterschiedlichste Gegenstände, respektive Produkte, herzustellen, die jeweils unterschiedliche Geometrien aufweisen, sowie ferner eine Verwendung einer solchen Form zur Herstellung von Formkörpern zur Verfügung zu stellen.

Diese Aufgabe wird durch eine Form gemäß Patentanspruch 1 sowie durch eine Verwendung gemäß Patentanspruch 15 gelöst.

Insbesondere wird diese Aufgabe durch eine Form zur Herstellung von Formkörpern aus einem gieß- und/oder spritzbaren Material gelöst, wobei die Form modular aufgebaut ist und zumindest einen Hohlraum aufweist, der von wenigstens einem ersten Formteil, wenigstens einem zweiten Formteil, das dem ersten Formteil im Wesentlichen gegenüberliegend angeordnet ist, und Verbindungsformteilen begrenzt ist, wobei die Verbindungsformteile zwischen dem ersten Formteil und dem zweiten Formteil angeordnet und relativ zueinander versetzbar sind und die Verbindungsformteile und/oder ein in Richtung des Hohlraums an den Verbindungsformteilen angeordnetes Dichtprofil einen jeweiligen Abstand zwischen dem wenigstens einen ersten Formteil und dem wenigstens einen zweiten Formteil definieren und wobei die Form gegebenenfalls wenigstens eine, insbesondere als Platzhalter dienende, Einlagevorrichtung aufweist, die herausnehmbar an dem ersten Formteil und/oder dem zweiten Formteil und/oder wenigstens einem Verbindungsformteil befestigbar ist.

Ein wesentlicher Punkt der Erfindung besteht darin, dass der Hohlraum, der als Matrize zur Herstellung des gewünschten Gegenstands dient, erfindungsgemäß nicht aus zwei vorgefertigten Formhälften, sondern aus zahlreichen zueinander versetzbar anordenbaren Formteilen sowie gegebenenfalls wenigstens einer, insbesondere als Platzhalter dienenden, Einlagevorrichtung gebildet wird.

Ein wichtiger Aspekt der Erfindung besteht ferner darin, dass der Hohlraum von einem ersten Formteil und einem zweiten Formteil gebildet wird, die einander gegenüberliegend angeordnet sind, und dass der Abstand zwischen dem ersten Formteil und dem zweiten Formteil durch Verbindungsformteile und/oder ein an den Verbindungsformteilen angeordnetes Dichtprofil gebildet wird, wobei die Verbindungsformteile und/oder das an den Verbindungsformteilen angeordnete Dichtprofil eine jeweilige seitliche Begrenzung zwischen dem ersten Formteil und dem zweiten Formteil definieren und das erste Formteil bezüglich des zweiten Formteils in einem definierten Abstand zueinander halten.

Der Hohlraum, der somit zwischen dem ersten Formteil, dem zweiten Formteil und den Verbindungsformteilen gebildet wird, ist somit hinsichtlich seines Volumens variierbar, da insbesondere die Verbindungsformteile relativ zueinander versetzbar sind und deshalb sowohl näher aneinander als auch weiter auseinander als auch in unterschiedlichen Winkeln zueinander angeordnet werden können. Darüber hinaus ist auch ein Austausch einzelner Verbindungsformteile gegen andere Verbindungsformteile möglich, die anders dimensioniert sein können oder eine andere Außenkontur aufweisen können.

Im Hinblick auf einen Abstand von erstem Formteil und zweitem Formteil zueinander können die Verbindungsformteile beispielsweise, je nach Form, unterschiedlich lang oder breit ausgebildet sein, um einen Abstand von erstem Formteil zu zweitem Formteil zu überbrücken und eine dichte Verbindung mit dem jeweiligen ersten Formteil und dem jeweiligen zweiten Formteil zu bilden.

Hinsichtlich einer jeweiligen Außenkontur eines Verbindungsformteils kann diese insbesondere hohlraumseitig variieren, beispielsweise um an einem Produkt Einbuchtungen oder Ausstülpungen zu produzieren.

Die Verbindungsformteile können ferner mit oder ohne einem in Richtung des Hohlraums an den Verbindungsformteilen angeordneten Dichtprofil verwendet werden, wobei das Dichtprofil gemäß einer Ausführungsform der Erfindung die jeweils selbe einen Abstand zwischen dem ersten Formteil und dem zweiten Formteil definierende, insbesondere vertikale, Erstreckung aufweisen kann wie die dem Dichtprofil jeweils lokal zugeordneten Verbindungsformteile oder alternativ das Dichtprofil eine größere Erstreckung als die dem Dichtprofil jeweils lokal zugeordneten Verbindungsformteile haben kann, wobei in letzterem Fall eine Kompression des Dichtprofils bis die, insbesondere vertikale, Erstreckung des Dichtprofils der richtungsgleichen Erstreckung des/der jeweils lokal zugeordneten Verbindungsformteil(s)(e) erreicht ist, entspricht.

In diesem Fall erfüllt das Dichtprofil primär eine Dichtfunktion, um einen Austritt von gieß- und/oder spritzbarem Material aus der geschlossenen oder sich schließenden Form zu verhindern, sowie ferner eine Ausgleichsfunktion, um durch eine bei einem Schließen der Form stattfindende Kompression des Dichtprofils, die mit einer Expansion des Dichtprofils zumindest in Richtung des Hohlraums einhergeht, eine etwaige Schrumpfung des gieß- und/oder spritzbaren Materials während einer Polymerisation, einer Verfestigung und/oder eines Aushärtens auszugleichen, respektive zu kompensieren.

Des Weiteren weist die erfindungsgemäße Form gegebenenfalls wenigstens eine, insbesondere als Platzhalter dienende, Einlagevorrichtung auf, die herausnehmbar an dem ersten Formteil und/oder alternativ an dem zweiten Formteil und/oder alternativ an dem wenigstens einen oder mehreren Verbindungsformteil(en) befestigbar ist. Die Einlagevorrichtung weist dabei wenigstens eine Außenform auf, die den Hohlraum, der von dem ersten Formteil, dem zweiten Formteil und den Verbindungsformteilen begrenzt wird, zumindest abschnittsweise definiert.

Eine derartige Einlagevorrichtung hat den erfindungsgemäßen Vorteil, dass die Einlagevorrichtung in Form eines Platzhalters genutzt werden kann, der einen Raum begrenzt, der nicht mit gieß- und/oder spritzbarem Material gefüllt werden soll, also in dem fertigen herzustellenden Gegenstand einen Raum darstellt, der nicht mit gieß- und/oder spritzbarem Material gefüllt ist, sondern eine Ausnehmung, Nut, beispielsweise ein Loch oder eine, beispielsweise V-förmige, Spalte darstellt.

Die Einlagevorrichtung, die hohlraumseitig in der erfindungsgemäßen Form angebracht werden kann, dient in vorteilhafter Weise somit neben anderen Formgebungsmerkmalen unter anderem auch dazu, Sollbruch- und/oder Knickstellen in dem herzustellenden Gegenstand zu erzeugen, wobei der fertig hergestellte Gegenstand nach Fertigstellung dann entlang dieser Sollbruch- und/oder Knickstellen in kleinere Einheiten, beispielsweise durch Zerbrechen, untergliedert oder durch Knicken beispielsweise zu einem dreidimensionalen Produkt gefaltet werden kann.

In äußerst praktischer Weise kann somit ein einziger Hohlraum auch zur Fertigung von vielen Produkten verwendet werden, die hergestellt werden, indem der aus dem gieß- und/oder spritzbaren Material in einem Hohlraum, respektive Produktvolumen, hergestellte Gegenstand nach seiner Fertigstellung, d. h. nach einer Polymerisation, respektive nach einem Aushärten und anschließendem Entformen, in die gewünschten bezüglich des gegossenen oder gespritzten Gegenstands kleineren Produkte verkleinert wird. Die gewünschten Produkte werden somit durch Zerbrechen des gegossenen oder gespritzten Gegenstands aus Letzterem quasi vereinzelt.

Ein weiterer Vorteil der in der Form anbringbaren wenigstens einen Einlagevorrichtung besteht ferner in der Möglichkeit, in dem fertigen Gegenstand Leerräume, beispielsweise in Form von Löchern, Hinterschneidungen, Auslassungen oder Nuten oder Spalten, zu erzeugen. Die Einlagevorrichtung(en) erstreckt/erstrecken sich zu diesem Zweck zur Erzeugung eines Durchgangs durch den gewünschten herzustellenden Gegenstand von erstem Formteil zu zweitem Formteil, während sich die Einlagevorrichtung(en) zur Erzeugung einer Nut oder einer nicht durchgängigen Ausnehmung in oder an dem gewünschten herzustellenden Gegenstand nur über einen Teil eines in geschlossenem Zustand der erfindungsgemäßen Form finalen Abstands von erstem Formteil zu zweitem Formteil erstreckt/erstrecken.

Gemäß einer Ausführungsform der Erfindung sind die Verbindungsformteile so ausgebildet, dass sie miteinander einen Rahmen bilden und an dem wenigstens einen ersten Formteil und/oder an dem wenigstens einen zweiten Formteil lösbar fixierbar sind.

Der durch die Verbindungsformteile gebildete Rahmen ist erfindungsgemäß so ausgebildet, dass die Rahmenteile einzeln sowie der Rahmen insgesamt so zwischen dem ersten Formteil und dem zweiten Formteil angeordnet sind, dass der so durch die Verbindungsformteile sowie das erste Formteil und das zweite Formteil gebildete Hohlraum für ein Einfüllen von Spritz- oder Vergussmasse geeignet und dicht ist, so dass die Spritz- oder Vergussmasse im Inneren des Hohlraums zu dem herzustellenden Gegenstand weiterverarbeitet, wie zum Beispiel polymerisiert, werden kann.

Gemäß einer Ausführungsform der Erfindung können die einzelnen Verbindungsformteile sowie gegebenenfalls auch die Einlagevorrichtung(en) miteinander mittels einer Steck-, Nut- und Feder- und/oder Puzzleverbindung zu dem Rahmen zusammengesetzt werden, wobei zur Herstellung einer puzzleteilartigen Verbindung der einzelnen Verbindungsformteile insbesondere eine Schwalbenschwanzverbindung gut geeignet ist, wobei eine schwalbenschwanzartige Ausformung eines Verbindungsformteils in eine entsprechend geformte korrespondierende Ausnehmung eines anderen Verbindungsformteils eingreift, so dass die beiden Verbindungsformteile auf diese Weise kraftschlüssig miteinander verbunden sind. Es sei an dieser Stelle betont, dass entsprechende Steck-, Nut- und Feder- und/oder Puzzleverbindungen auch miteinander kombiniert werden können, wenn dies, beispielsweise in Eckbereichen oder zur Verbesserung einer Dichtigkeit, sinnvoll erscheint.

Gemäß einer vorteilhaften Ausführungsform der Erfindung weist das erste Formteil und/oder das zweite Formteil ein magnetisches Material auf oder ist zumindest teilweise aus einem solchen gefertigt. Als magnetisches Material kommt hierbei vorzugsweise ein magnetisches Metall, insbesondere ein magnetischer Edelstahl, in Betracht.

Eine Vorsehung von magnetischem Material in oder an dem ersten Formteil und/oder dem zweiten Formteil oder eine Herstellung des ersten und/oder zweiten Formteils aus einem magnetischen Material ist erfindungsgemäß besonders vorteilhaft, wenn auch die Verbindungsformteile selbst oder der aus den Verbindungsformteilen hergestellte Rahmen sowie ferner die Einlagevorrichtung(en) magnetische Komponenten aufweist/aufweisen oder selbst magnetisch ist/sind, wie dies erfindungsgemäß vorgesehen ist, da auf diese Weise eine sehr einfache Befestigung der einzelnen Verbindungsformteile oder des gesamten Rahmens oder der Einlagevorrichtung(en) an dem ersten Formteil und/oder dem zweiten Formteil möglich ist.

So können entweder die einzelnen Verbindungsformteile oder der gesamte Rahmen oder die Einlagevorrichtung(en) einfach magnetisch, beispielsweise auf das erste Formteil, angesetzt werden, wobei eine Fixierung der Verbindungsformteile oder des Rahmens oder der Einlagevorrichtung(en) an dem ersten Formteil durch eine magnetische Anziehung von erstem Formteil und Verbindungsformteil oder Rahmen oder Einlagevorrichtung(en) erfolgt.

In gleicher Weise kann die erfindungsgemäße Form im Anschluss geschlossen werden, indem das zweite Formteil auf der dem ersten Formteil gegenüberliegenden Seite auf oder an die Verbindungsformteile oder bevorzugt den vollständigen und zuvor gefertigten und dann mit dem ersten Formteil verbundenen Rahmen auf- oder angesetzt wird, wodurch der als Matrize für den herzustellenden Gegenstand dienende Hohlraum der Form geschlossen wird.

Es sei an dieser Stelle erwähnt, dass ein Schließen der Form auch auf andere als magnetische Weise, beispielsweise mechanisch mittels eines Schnallen- oder Klippmechanismus, oder auf andere bekannte Weise durchgeführt werden kann, wie beispielsweise Druck, der auf das zweite Formteil angewandt wird. Dieser Druck kann beispielsweise hydraulisch, pneumatisch oder elektrisch, beispielsweise auch mittels eines Motors, insbesondere Linear- oder Servomotors, erzeugt, respektive angewandt, werden.

Ein wesentlicher Punkt einer magnetischen Ausbildung von zumindest einem ersten oder zweiten Formteil sowie der Verbindungsformteile einzeln oder der Einlagevorrichtung(en) einzeln oder des gesamten Rahmens besteht erfindungsgemäß darin, dass die einzelnen Verbindungsformteile oder der Rahmen als Gesamtes oder die Einlagevorrichtung(en) auf diese Weise äußerst einfach an dem ersten oder zweiten Formteil befestigt oder von dem ersten oder zweiten Formteil gelöst und auf diese Weise auch in ihrer jeweiligen Stellung an dem ersten oder zweiten Formteil bewegt, justiert oder verstellt werden können. Nachdem die Verbindungsformteile oder der gesamte Rahmen dann an dem ersten oder zweiten Formteil sicher und verrutschungsfrei befestigt, respektive montiert, sind, kann dann eine Befestigung des jeweils gegenüberliegenden weiteren Formteils entweder ebenfalls magnetisch oder aber, wie vorbeschrieben, auf andere mechanische Weise erfolgen, wobei das dem die Verbindungsformteile bzw. den Rahmen aufweisenden Formteil gegenüberliegende Formteil beispielsweise auf die Verbindungsformteile oder den aus den Verbindungsformteilen gebildeten Rahmen abgesenkt und sodann, vorzugsweise unverrückbar, befestigt wird.

Hierbei ist es möglich, dass die erfindungsgemäße Form in einem Zug vollständig geschlossen wird oder aber, dass die Form zunächst lediglich soweit geschlossen wird, dass das Dichtprofil in Anlage mit dem jeweiligen Verschlussformteil, d.h dem jeweiligen ersten oder zweiten Formteil kommt, so dass die Form durch das Dichtprofil abgedichtet ist, so dass initial kein in der Form befindliches oder in die Form einfüllbares gieß- und/oder spritzbares Material ungewollt aus der Form austreten kann. Im weiteren Fortgang kann die Form dann durch ein weiteres Schließen des jeweiligen Verschlussformteils, d.h des jeweiligen ersten oder zweiten Formteils, bis zu einem finalen Verschlusszustand weiter geschlossen werden, wobei sich das Dichtprofil vorzugsweise unter einer Kompensation einer etwaigen Schrumpfung des gieß- und/oder spritzbaren Materials während einer Polymerisation und/oder eines Aushärtens des gieß- und/oder spritzbaren Materials in den Matrizen- oder Produktraum hinein erstreckt und sich an den herzustellenden Gegenstand anschmiegt.

Gemäß einer weiteren vorteilhaften Ausführungsform der Erfindung sind die Magnete, insbesondere Permanentmagnete, zum Befestigen der Verbindungsformteile oder der Einlagevorrichtung(en) an dem wenigstens einen ersten Formteil und/oder dem wenigstens einen zweiten Formteil in Ausnehmungen der Verbindungsformteile oder der Einlagevorrichtung(en) angeordnet oder integral mit den Verbindungsformteilen oder der/den Einlagevorrichtung(en) ausgebildet. Auf diese Weise können die Verbindungsformteile oder die Einlagevorrichtung(en) unmittelbar in Anlage mit dem ersten und/oder zweiten Formteil gebracht werden, ohne dass etwaige Magnete eine unmittelbare und dichte Anbringung der Verbindungsformteile an dem ersten und/oder zweiten Formteil behindern würden.

An dieser Stelle sei darauf hingewiesen, dass die Einlagevorrichtung(en) erfindungsgemäß im Wesentlichen in derselben Weise handhabbar und aufgebaut sind wie die Verbindungsformteile und nach Wunsch zu einer Konstruktion, wie beispielsweise einem Rahmen, verbindbar sind.

Sofern die Magnete zum Befestigen der Verbindungsformteile in Ausnehmungen der Verbindungsformteile angeordnet sind, besteht zudem die Möglichkeit, die jeweiligen Magnete aus diesen Ausnehmungen zu entfernen, um eine Magnetfixierung der Verbindungsformteile an dem ersten und/oder zweiten Formteil zu lösen. Des Weiteren ist auf diese Weise auch ein Austausch der Magnete an den Verbindungsformteilen möglich.

Eine integrale Verbindung der Magnete mit den Verbindungsformteilen, beispielsweise dadurch, dass die Magnete von einem Material der Verbindungsformteile vollständig umschlossen sind, bietet darüber hinaus den Vorteil, dass die Magnete unverlierbar mit den Verbindungsformteilen verbunden sind und auf diese Weise ein Verlegen oder Verlieren der Magnete erfindungsgemäß unmöglich ist.

Gemäß einer bevorzugten Ausführungsform der Erfindung weisen die Verbindungsformteile und/oder die Einlagevorrichtung(en) eine, vorzugsweise inerte, Oberfläche, beispielsweise aus Metall, insbesondere aus Edelstahl, oder Kunststoff, insbesondere aus Polytetrafluorethylen (PTFE), auf.

In vorteilhafter Weise ist erfindungsgemäß so sichergestellt, dass eine Wechselwirkung der Gieß- oder Vergussmasse mit den Verbindungsformteilen und/oder Einlagevorrichtung(en), respektive der einer Produktseite der erfindungsgemäßen Form zugewandten Seite der Verbindungsformteile und/oder Einlagevorrichtung(en), unterbleibt, so dass letztendlich der fertige hergestellte Gegenstand zum einen problemlos aus der Form entnommen werden kann und zum anderen eine optimale Oberfläche aufweist. In gleicher Weise weisen auch die ersten und zweiten Formteile zumindest auf ihrer dem Matrizenraum zugewandten Seite eine inerte Oberfläche auf, die ebenfalls beispielsweise aus Metall, insbesondere aus Edelstahl, oder Kunststoff, insbesondere aus PTFE, bestehen kann.

An dieser Stelle sei darauf hingewiesen, dass im Rahmen dieser Erfindung zwar immer von einem ersten und einem zweiten Formteil die Rede ist, diese ersten und zweiten Formteile jedoch ihrerseits aus mehreren Segmenten zusammengesetzt sein können, wobei, wie auch bei dem erfindungsgemäßen Rahmen, Steck-, Nut- und Feder- sowie Puzzleverbindungen zum Einsatz kommen können, so dass nicht nur der Rahmen, sondern auch die ersten und zweiten Formteile äußerst einfach montierbar und demontierbar sowie hinsichtlich ihrer Form veränderbar sind.

Gemäß einer weiteren Ausführungsform der Erfindung weist das wenigstens eine erste Formteil und/oder das wenigstens eine zweite Formteil sowie gegebenenfalls wenigstens ein Verbindungsformteil und/oder die Einlagevorrichtung(en) auf ihrer dem Hohlraum, d.h. dem Matrizenraum, zugewandten Seite eine polierte, geätzte, geschliffene, sandgestrahlte oder geprägte Oberfläche auf.

Dies bietet den erfindungsgemäßen Vorteil, dass der herzustellende Gegenstand wahlweise mit einer Oberfläche hergestellt werden kann, die hochglänzend und/oder matt und/oder geprägt ist, wobei die Oberfläche auf dem herzustellenden Gegenstand nicht einheitlich, sondern unterschiedlich ausgebildet, nämlich beispielsweise abschnittsweise hochglänzend, matt oder geprägt oder mit einer anderweitigen Struktur versehen, sein kann.

Gemäß einer bevorzugten Ausführungsform der Erfindung ist das wenigstens eine erste Formteil ortsfest angeordnet und das wenigstens eine zweite Formteil zum Schließen der Form in Richtung des wenigstens einen ersten Formteils beweglich, insbesondere, vorzugsweise translatorisch, absenkbar, ausgebildet.

Dies bietet den maßgeblichen Vorteil, dass das zweite Formteil zum Schließen und zum Öffnen der Form in einer exakten Ausrichtung zu dem ersten Formteil bewegt werden kann, so dass der Hohlraum der Form, d. h. die Matrize zum Herstellen des gewünschten Gegenstands, immer in einer exakt definierten und reproduzierbaren Weise erzeugt werden kann, wenn die Form geöffnet oder geschlossen wird, und zwar auch dann, wenn zwischen dem ersten und dem zweiten Formteil unterschiedlich geformte und unterschiedlich dimensionierte aus Verbindungsformteilen zusammengesetzte Rahmen angeordnet sind.

Gemäß einer weiteren Ausführungsform der Erfindung kann das Dichtprofil ein Gummi- oder Kautschuckprofil sein, das an den Verbindungsformteilen hohlraumseitig angeordnet ist. Selbiges gilt auch für den aus den Verbindungsformteilen gebildeten Rahmen. Dieses Gummiprofil kann seinerseits wiederum hohlraumseitig, also dem herzustellenden Produkt zugewandt, eine polierte, geätzte, geschliffene, sandgestrahlte oder geprägte Oberfläche aufweisen, um wiederum an dem herzustellenden Gegenstand unterschiedliche Oberflächenstrukturen zu erzeugen.

Ein weiterer erfindungsgemäßer Vorteil eines Einsatzes eines solchen Gummi- oder Kautschuckprofils besteht ferner in einer zusätzlichen Abdichtung des Hohlraums der Form, da sich das Gummi- oder Kautschuckprofil eng an die dem Matrizen-, respektive Produktraum, zugewandten inneren Oberflächen und Kanten des ersten und zweiten Formteils sowie des aus den Verbindungsformteilen zusammengesetzten Rahmens anschmiegt.

Die Kombination aus den umlaufenden Rahmenelementen und dem Profilgummi sorgt dafür, dass die innerhalb des Rahmens, d.h. den jeweiligen Matrizenräumen zugewandte, umlaufende Gummi- oder Kautschuckkonstruktion an Ort und Stelle bleibt, und zwar auch dann, wenn Spritz- und/oder Vergussmasse unter Druck in den Matrizenraum injiziert wird, so dass die Spritz- und/oder Vergussmasse nicht aus dem Matrizenhohlraum herausgedrückt wird.

Ein derartiges erfindungsgemäß eingesetztes Gummi- oder Kautschuckprofil erfüllt somit eine Doppelfunktion, nämlich einerseits eine Dichtfunktion sowie andererseits eine Formgebungsfunktion gegenüber dem herzustellenden Gegenstand.

In vorteilhafter Weise weist das Gummi- oder Kautschuckprofil erfindungsgemäß eine Lasche oder Leiste auf, wobei die Lasche oder Leiste in das Verbindungsformteil eingreift, das Verbindungsformteil unterschneidet und/oder hintergreift.

Die Lasche oder Leiste weist wiederum ihrerseits an wenigstens einem Kontaktabschnitt mit dem Verbindungsformteil, insbesondere gegenüberliegend einem dem Hohlraum zugewandten Bereich, einen Bereich mit erhöhter Reibung auf, wobei dieser Bereich mit erhöhter Reibung insbesondere aufgeraut und/oder gezahnt ist.

Die Lasche oder Leiste des Gummi- oder Kautschuckprofils dient hierbei einer sicheren Fixierung und/oder Verankerung des Gummi- oder Kautschuckprofils an dem Verbindungsformteil und damit einhergehend auch an dem aus dem Verbindungsformteil zusammengesetzten Rahmen, so dass das Gummi- oder Kautschuckprofil weder bei einem Befüllen des Hohlraums der Form noch bei einem Entformen des hergestellten Gegenstands aus seiner vorgesehenen Position herausbewegt werden kann und auf diese Weise ein Verrutschen oder Verschieben des Gummi- oder Kautschuckprofils praktisch unmöglich ist. Wie vorerwähnt, hintergreift oder unterschneidet die Lasche oder Leiste des Gummi- oder Kautschuckprofils zu diesem Zweck das Verbindungsformteil, respektive den aus den Verbindungsformteilen zusammengesetzten Rahmen, oder greift in sonstiger Weise in eine Ausnehmung oder einen Rücksprung des jeweiligen Verbindungsformteils oder Rahmens ein.

Erfindungsgemäß ist an dieser Stelle ferner eine zusätzliche Sicherung zur ortsfesten Fixierung des Gummi- oder Kautschuckprofils vorgesehen, die darin besteht, dass die Lasche oder Leiste in ihrem Kontaktabschnitt mit dem Verbindungsformteil, respektive Rahmen, einen zusätzlichen Bereich erhöhter Reibung aufweist, so dass sich das Gummi- oder Kautschuckprofil insbesondere auch im Betrieb der erfindungsgemäßen Form keinesfalls relativ gegenüber dem jeweiligen Verbindungsformteil oder Rahmen bewegt.

Gemäß einer weiteren vorteilhaften Ausführungsform der Erfindung weist das Gummi- oder Kautschuckprofil hohlraumseitig ferner eine Profilierung auf, die insbesondere in Form einer Verjüngung ausgebildet sein kann, die sich vorzugsweise in Richtung des während einer Öffnung der Form zu öffnenden ersten oder zweiten Formteils erstreckt. Mit anderen Worten ist das erfindungsgemäß eingesetzte Gummi- oder Kautschuckprofil so ausgebildet, dass es sich in der Richtung erweitert, also einen größeren lichten Querschnitt bietet, in der das hergestellte Produkt entformt werden soll.

Diese Maßnahme dient dazu, dass ein hergestelltes Produkt jeweils leicht und reibungsfrei aus der erfindungsgemäßen Form entnommen werden kann, während gleichzeitig sichergestellt ist, dass sowohl der Rahmen als auch das Gummi- oder Kautschuckprofil sicher ortsfest in ihrer vorbestimmten Position verbleiben.

Gemäß einer weiteren erfindungsgemäßen Ausführungsform weist das Gummi- oder Kautschuckprofil ein Übermaß auf, so dass bei einem Schließen der Form eine Kompression des Gummi- oder Kautschuckprofils, vorzugsweise einhergehend mit einer Expansion des Gummi- oder Kautschuckprofils zumindest in Richtung des Hohlraums, und bei einem Öffnen der Form eine Expansion des Gummi- oder Kautschuckprofils erfolgt.

Das erfindungsgemäß einsetzbare Gummi- oder Kautschuckprofil wird somit beim Schließen der Form in einen gespannten Zustand versetzt, der sich bei einem Öffnen der Form wieder entspannt. Diese erzeugte Vorspannung des Gummi- oder Kautschuckprofils im geschlossenem Zustand der Form kann beim Öffnen der Form in äußerst vorteilhafter Weise dazu genutzt werden, dass das Gummi- oder Kautschuckprofil sich aufgrund seiner Entspannung beim Öffnen der Form von dem hergestellten Gegenstand abdrückt und auf diese Weise ein Entformen des hergestellten Gegenstands erleichtert, so dass der hergestellte Gegenstand einfach und problemlos aus der erfindungsgemäßen Form entnommen werden kann.

Des Weiteren kann das Gummi- oder Kautschuckprofil hohlraumseitig eine Profilierung aufweisen, die sich unter Druck, der bei einem Schließen der Form auf das Gummi- oder Kautschuckprofil ausgeübt wird, insbesondere geradlinig, glättet.

Auch diese erfindungsgemäße Maßnahme ist gut geeignet, um ein Entformen des hergestellten Gegenstands zu vereinfachen. Darüber hinaus kann das Gummi- oder Kautschuckprofil aufgrund seiner Elastizität einerseits sowie seiner Profilierung andererseits sehr gut von etwaigen Rückständen der Gieß- oder Vergussmasse gereinigt werden.

Im Übrigen weist das Gummi- oder Kautschuckprofil erfindungsgemäß zumindest hohlraumseitig eine gegenüber dem gieß- und/oder spritzbaren Material inerte Beschichtung, insbesondere Releasebeschichtung, auf.

Auch diese Maßnahme dient erfindungsgemäß einer leichteren Entformbarkeit des hergestellten Gegenstands und beugt darüber hinaus einer Verschmutzung des Gummi- oder Kautschuckprofils durch etwaige Gieß- oder Vergussmasse vor.

Gemäß einer weiteren Ausführungsform der Erfindung kann das Gummi- oder Kautschuckprofil zumindest hohlraumseitig auch eine gegenüber dem gieß- und/oder spritzbaren Material reaktive Oberfläche, beispielsweise in Form einer Beschichtung oder insbesondere Haftbeschichtung, aufweisen.

Eine derartige reaktive Oberfläche gegenüber dem gieß-und/oder spritzbaren Material kann erfindungsgemäß verwendet werden, wenn das Gummi- oder Kautschuckprofil zumindest teilweise oder zur Gänze an dem hergestellten Gegenstand haften bleiben soll. Eine solche reaktive Oberfläche zur Verbindung von hergestelltem Gegenstand und Gummi- oder Kautschuckprofil ist beispielsweise dann sinnvoll, wenn das Gummi- oder Kautschuckprofil an dem hergestellten Gegenstand verbleiben soll, da gewünscht ist, dass der hergestellte Gegenstand randseitig fest mit einem Gummi- oder Kautschuk verbunden oder versehen sein soll, der, je nach Anwendungsfall, für den hergestellten Gegenstand selbst als Dichtmaterial dienen kann.

Gemäß einer Ausführungsform der Erfindung kann diese reaktive Oberfläche auch in Form einer Haftbeschichtung vorgesehen sein, die eine Verklebung von hergestelltem Gegenstand und der dem hergestellten Gegenstand zugewandten Seite des Gummi- oder Kautschuckprofils gewährleistet.

Des Weiteren wird die erfindungsgemäße Aufgabe auch durch eine Verwendung einer Form gemäß vorstehenden Ausführungen zum Herstellen von Formkörpern aus einem gieß- und/oder spritzbaren Material gelöst.

Zusammenfassend kann der Gegenstand der Erfindung somit wie folgt dargestellt werden.

Diese Erfindung vermeidet das gemäß dem Stand der Technik gegebene Problem, für jede Produktgröße eine komplett neue Form herstellen zu müssen. Die Erfindung ermöglicht es gegenüber dem Stand der Technik, dass die Abmessungen von herzustellenden Gegenständen und Produkten hinsichtlich ihrer Länge, Breite und Höhe flexibel gestaltet und hergestellt werden können.

Erfindungsgemäß, respektive gemäß einem Ausführungsbeispiel der Erfindung, wird ein Kunststoffrahmen auf oder an einem Formteil, d.h. beispielsweise dem ersten Formteil, angebracht, das einer spätere Sichtseite eines herzustellenden Gegenstands zugeordnet ist, wobei der Kunststoffrahmen dort durch Magnete gehalten wird.

Die Verbindungsformteile, die als Kunststoffstreifen ausgebildet sein können, werden mittels einer Puzzleverbindung, insbesondere einer Schwalbenschwanzverbindung, oder auf andere Weise formschlüssig miteinander zu einem Rahmen verbunden und können an beliebigen Stellen der Form, beispielsweise des ersten Formteils, angeordnet werden.

Da die Verbindungsformteile erfindungsgemäß leicht zu platzieren und anzupassen sind, ist es erfindungsgemäß einfach, Produkte mit unterschiedlichen Abmessungen in Länge, Breite und Höhe herzustellen.

Wenn sich die beispielsweise als Formplatten ausgebildeten ersten und zweiten Formteile in einer vertikalen Bewegung aufeinander zu bewegen, entsteht ein Produkthohlraum, der beispielsweise mittels eines Gummiprofils abgedichtet werden kann, wobei das Gummi- oder Kautschuckprofil dafür sorgt, dass auch bei einem geringen Überdruck in der Form kein Produktmaterial entweichen kann.

Durch das Gummi- oder Kautschuckprofil kann nach Wunsch ferner die Kontur des Produkts geformt werden.

Somit ist es erfindungsgemäß auf einfache und kostengünstige sowie sehr flexible Weise möglich, durch Veränderung(en) der Form und der Positionierung der Kunststoffstreifen, d.h. der Verbindungsformteile, und des Gummiprofils universelle Produkte herzustellen, die sich in Länge, Breite und Höhe voneinander unterscheiden.

Des Weiteren können mit Hilfe eines Rahmens, der mehrere Kompartimente, d.h. Matrizenräume, aufweist, auch mehrere Produkte, vorzugsweise mit der gleichen Dicke, gleichzeitig nebeneinander hergestellt werden.

Als Materialien werden erfindungsgemäß bevorzugt insbesondere rostfreier Stahl, insbesondere Edelstahl, für die Bodenplatte, d.h. beispielsweise für das erste Formteil, sowie für die Deckelplatte, d.h. beispielsweise für das zweite Formteil, verwendet. Für die Verbindungsformteile kann Kunststoff, wie beispielsweise Kunststoffstreifen, verwendet werden, wobei insbesondere PTFE-Streifen bevorzugt sind. Letzteres Material hat neben einer leichten Bearbeitbarkeit und damit Anpassbarkeit an die jeweils gewünschten Geometrien des herzustellenden Gegenstands den zusätzlichen Vorteil, inert gegenüber den meisten gieß- und/oder spritzbaren Materialien zur Herstellung des gewünschten Gegenstands zu sein. Es sei jedoch darauf hingewiesen, dass die Verbindungsformteile auch aus einem gegenüber den gieß- und/oder spritzbaren Materialien inerten Metall gefertigt sein können.

Als Gummiprofil ist ein Silikongummiprofil bevorzugt. Auch dieses ist gegenüber den meisten gieß- und/oder spritzbaren Materialien zur Herstellung des gewünschten Gegenstands in vorteilhafter Weise inert.

Im Übrigen verfügt die erfindungsgemäße Form nach Wunsch über eine Angussdüse, um die Möglichkeit zu haben, die erfindungsgemäße Form auch nach einem Schließen der Form zu füllen.

Die Hohlraumseite der beispielsweise Stahlplatten kann eine hochglanzpolierte, geätzte/geschliffene oder geprägte Oberfläche haben, um Produkte mit hochglänzenden und/oder matten und/oder geprägten Oberflächen herstellen zu können. Diese Platte ist Teil der unteren Formhälfte, die an der Gießmaschine befestigt ist und nicht bewegt werden kann.

Nachfolgend wird die Funktionalität der Erfindung näher erläutert.

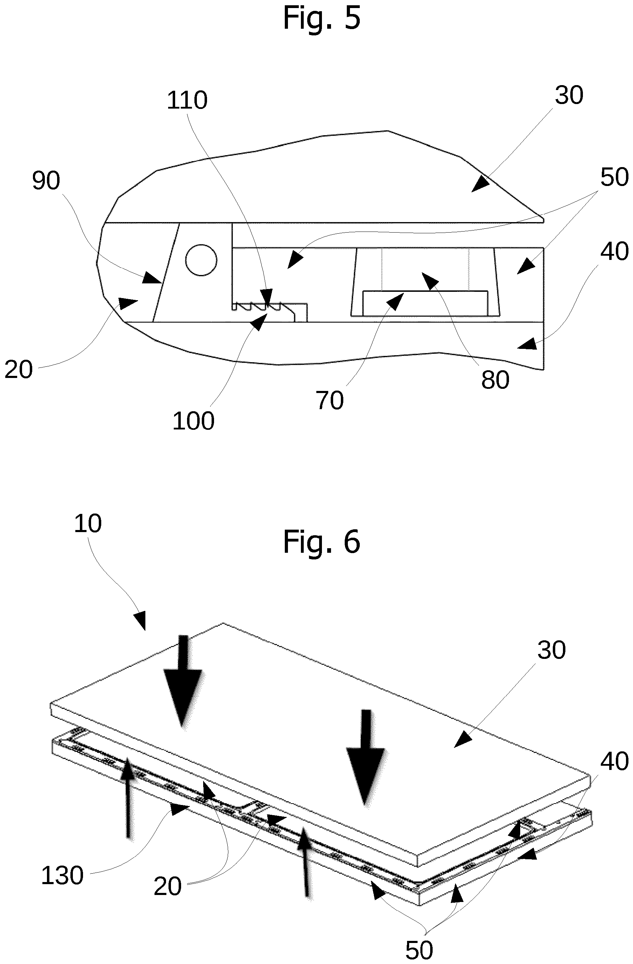

Auf der unteren Hohlraumseite der erfindungsgemäßen Form werden die Leisten, d.h. die Verbindungsformteile, die den Rahmen bilden und innen mit einem Gummiprofil versehen sind, angebracht. Da die Leisten mit Magneten versehen sind, kann der Rahmen auf der unteren Hohlraumseite schnell festgeklemmt, d.h. fixiert, werden. Indem die vorhandenen Leisten durch neue Leisten mit einem anderen Format ersetzt werden, können Produkte mit einer unbegrenzten Anzahl verschiedener Größen hergestellt werden. Die Stahlplatten, d.h. die ersten und zweiten Formteile, die von einer zur Herstellung der gewünschten Gegenstände verwendeten Formmaschine nur vertikal bewegt werden können, setzen auf den Gummi auf und verschließen auf diese Weise die durch die Rahmenstruktur und die beispielsweise als Stahlplatten ausgebildeten ersten und zweiten Formteile gebildeten Kompartimente der erfindungsgemäßen Form. Die Kompartimente, respektive Kammern, werden mit dem gieß- und/oder spritzbaren Material, wie beispielsweise mit einer Harzmischung, gefüllt und dann erhitzt, damit das gieß- und/oder spritzbare Material, respektive die Harzmischung, aushärten kann. Zum Beispiel an der Position der in Fig. 6 eingezeichneten dicken Pfeile kann das Material, das zur Herstellung des gewünschten Gegenstands verwendet wird, in den Formhohlraum, d.h. in den Matrizenraum, eingespritzt werden, wobei, je nach Wunsch, auch andere und gegebenenfalls mehrere Zugabestellen, beispielsweise vom Boden und/oder der Seite der Form, für das gieß- und/oder spritzbare Material vorgesehen sein können. Die erfindungsgemäße Form eignet sich somit auch hervorragend für ein sogenanntes Reaction Injection Moulding-Verfahren (RIM Process). Wenn das gieß- und/oder spritzbare Material, wie beispielsweise die Harzmischung, ausgehärtet ist, kann die Maschine geöffnet werden, woraufhin das oder die Produkt(e) entnommen werden kann/können.

Ein wesentlicher Vorteil der Erfindung besteht somit in der Flexibilität, schnell auf die Produktion eines Produkts mit einer anderen Größe und Dicke, d.h. anderen Geometrien, umzustellen, ohne hohe Kosten zu verursachen.

Neben der Dichtungsfunktion während des Prozesses hat das erfindungsgemäß verwendete Gummi- oder Kautschuckprofil auch die Funktion, sich während des Gießens einzudellen, um während der Polymerisation, respektive des Aushärtens, des gieß- und/oder spritzbaren Materials, wie beispielsweise eines Harzes, einen gewissen Gegendruck aufzubauen.

Neben der Dichtungsfunktion während des Prozesses hat das Gummiprofil auch die Funktion, sich während des Gießens einzudellen, um sich dann während einer Polymerisation des gieß- und/oder spritzbaren Materials wieder zu expandieren, um in der Form eine Schrumpfung des polymerisierenden Materials zu ermöglichen oder zu erzeugen.

Ferner ist es mittels einer Verwendung eines Dichtprofils, im vorliegenden Fall beispielsweise Gummi- oder Kautschuckprofils, möglich, einer Schrumpfung des polymerisierenden Materials zu folgen, indem das Gummi- oder Kautschuckprofil während der Schrumpfung weiter gepresst, respektive komprimiert, wird, wobei sich das Gummi- oder Kautschuckprofil so verformt, dass es sich in den Produktraum hinein ausdehnt, während es von erstem und zweitem Formteil gestaucht wird. Dies kann beispielsweise dadurch erfolgen, dass die Formhälften, d.h. das erste und das zweite Formteil, einander weiter angenähert werden, so dass das Gummi- oder Kautschuckprofil mit seiner dem Matrizenraum zugewandten Seite weiter in den Matrizenraum hineingedrückt wird. Eine Notwendigkeit einer Zugabe von weiterem gieß- und/oder spritzbaren Material, wie beim Stand der Technik, ist somit erfindungsgemäß nicht mehr nötig. Als Ergebnis wird ein auf beiden Seiten schönes Produkt erhalten.

Im Übrigen halten die umlaufenden Rahmenelemente das Gummiprofil an Ort und Stelle. Daraus ergibt sich der Vorteil, dass das Gummiprofil beim Öffnen der Form an seinem Platz bleibt und somit beim nächsten Guss nicht wieder eingebaut werden muss, was zu einer maßgeblichen Zeitersparnis führt. Um eine korrekte Halterung sicherzustellen, verursachen die Rippen auf der Lasche des Gummiprofils eine horizontale Reibung, wobei die Lasche des Gummiprofils unter den umlaufenden Rahmenelementen angeordnet werden kann, wodurch eine vertikale Fixierung des Gummi- oder Kautschuckprofils gewährleistet ist.

Ferner ist das Gummi- oder Kautschuckprofil abgewinkelt. Dadurch lässt sich der hergestellte Gegenstand, beispielsweise die gegossene Platte, leichter lösen und entformen und der Gummi kann häufiger verwendet werden.

Gemäß einer alternativen Ausführungsform kann das Gummi- oder Kautschuckprofil so gewählt werden, dass nach der Kompression beim Schließen der Form eine gerade Seite entsteht. Der Gegenstand, beispielsweise die Platte, der/die gegossen wird, erhält auf diese Weise angrenzend an das Gummi- oder Kautschuckprofil eine gerade Seite. Sobald sich die Form öffnet, springt dann der Gummi in seine ursprüngliche Form zurück. Der gegossene Gegenstand kann dann leicht entformt werden und der Gummi bleibt unversehrt.

Des Weiteren wurde erfindungsgemäß erkannt, dass das Gummiprofil und die umlaufenden Rahmenelemente eine thermische Isolierung zwischen dem unteren und dem oberen Formteil sicherstellen und dadurch bei einem Erwärmen der beiden Formteile einen thermischen Kurzschluss zwischen den beiden Formteilen verhindern, was insbesondere dann wichtig ist, wenn die beiden Formteile auf unterschiedliche Temperaturen erwärmt werden. Dadurch beeinflussen sich die Formenerwärmung(en)/-abkühlung(en) nicht gegenseitig und insbesondere nicht am jeweiligen Rand der Formen-, respektive Produktkontur.

Das Gummiprofil und die umlaufenden Rahmenelemente sind erfindungsgemäß aus einem Material hergestellt, das im Wesentlichen nicht an dem Material, wie beispielsweise Quaryl°, aus welchem das Produkt hergestellt werden soll, haftet. Dies hat wiederum den Vorteil, dass das Gummiprofil häufiger verwendet werden kann.

Im Falle einer Leckage durch das Gummiprofil können ferner eventuelle Kunststoffreste, wie beispielsweise Quaryl°-Reste, von den umlaufenden Rahmenelementen leicht entfernt werden. Bei einem Guss ohne Gummiprofil lassen sich Quaryl^{®}-Reste leicht von den umlaufenden Rahmenelementen entfernen.

Alternativ kann ein Gummi(profil) aus einem Material verwendet werden, das gut an dem Material, wie beispielsweise Quaryl^{®}, haftet. Im Ergebnis kann somit ein Produkt mit einer Kombination aus hartem Material, wie beispielsweise Quaryl^{®}, und einem weichen Material, nämlich Gummi, in einem Guss hergestellt werden. Der Gummi kann dann beispielsweise als geformte Dichtung für ein Produkt oder eine weiche Seite des Gussgegenstands, wie beispielsweise der Gussplatte, dienen.

Des Weiteren können bei einer erfindungsgemäßen Verwendung von Einlagevorrichtungen oder -profilen V-förmige oder geradlinig verlaufende Nuten und Ausnehmungen in dem herzustellenden Formkörper erzeugt werden. Dies bietet den wichtigen erfindungsgemäßen Vorteil, dass in einem späteren Schritt einer Endproduktherstellung Kanten und Ecken gebogen oder durch Knicken hergestellt werden können, ohne dass eine Nut gesägt oder gefräst werden muss, da die Nut(en) bereits während des Gusses erzeugt und/oder während des Aushärtens für eine spätere Nutzung dauerhaft verfestigt werden kann/können. Ein weiterer sich aus einer Verwendung von Einlagevorrichtungen ergebender erfindungsgemäßer Vorteil besteht ferner darin, dass hartes Material, beispielsweise Kunststoffmaterial mit einem harten Füllstoff, wie zum Beispiel Quaryl^{®}, das normalerweise schwierig nachzubearbeiten ist, bereits in seiner gewünschten Form hergestellt werden kann, so dass eine schnelle Abnutzung von Fräs-/Sägewerkzeuge(n) erfindungsgemäß vermieden werden kann. Das erfindungsgemäße Gießen von Rillen und Nuten, insbesondere in V-Form, aber auch in anderen Formen, ist in dieser Hinsicht von Vorteil.

Ein weiterer wichtiger Vorteil einer erfindungsgemäßen Verwendung von Einlagevorrichtungen oder -profilen ist die Möglichkeit, an einer oder mehreren genau definierten Stellen des herzustellenden Gegenstands eine oder mehrere Bruchstelle(n) zu schaffen. Eine solche kann mit einer Gusseinlage, nämlich einer erfindungsgemäßen Einlagevorrichtung, während der Herstellung des herzustellenden Gegenstands gegossen werden. Auf diese Weise ist es möglich, beispielsweise eine große Platte herzustellen und die Platte nach deren Herstellung an der oder den jeweiligen erzeugten Bruchlinie(n) zu brechen, um auf diese Weise zwei oder mehr kleinere Platten zu erhalten, ohne zu Schneid- /Fräs- oder Sägewerkzeugen greifen zu müssen, die sich, insbesondere bei harten Werkstoffen, schnell abnützen und dadurch hohe Kosten verursachen würden.

Weitere Vorteile einer solchen Erzeugung von Sollbruchstellen lassen sich ferner wie folgt zusammenfassen:
- Es kann ein großes geformtes Produkt, wie beispielsweise eine große Platte, hergestellt werden, das/die leicht, nämlich durch Brechen, verkleinert werden kann.
- Es muss nur einmalig gieß- und/oder spritzbares Material in eine Form verbracht werden, um daraus eine Platte, respektive ein Formteil, herzustellen und zu bearbeiten, d. h. an einer Herstellmaschine ist, trotz der Möglichkeit mehrere kleine Produkte herzustellen, pro Platte nur eine Manipulatoraktion notwenig; d.h. der Manipulator muss nicht jedes Mal neu eingestellt werden, und zwar insbesondere auch dann, wenn während einer Formenfüllung verschiedene Produktgrößen gewünscht sind.
- Wenn eine große Platte hergestellt wird, um daraus zwei oder drei kleinere Platten herzustellen, muss die große Platte erfindungsgemäß nicht erst durch Sägen geteilt werden, bevor ein Produkt geformt werden kann.
- So können verschiedene Bruchflächen erzeugt werden, z. B. gerade Bruchflächen oder Bruchflächen mit V-Nut und schräger Bruchfläche, respektive Bruchkante.
- Für die Einlagevorrichtungen, wie beispielsweise Zwischenstreifen oder Puzzlestreifen, wird kein Gummiprofil benötigt, was wiederum einen Einsatz von Gummi spart.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: eine schematische Darstellung einer erfindungsgemäßen Form gemäß einer ersten Ausführungsform;
- Fig. 2 bis Fig. 5: schematische Darstellungen von Detailvergrößerungen der in Fig. 1 dargestellten erfindungsgemäßen Ausführungsform;
- Fig. 6: eine schematische Darstellung einer Funktionsweise der erfindungsgemäßen Ausführungsform gemäß Fig. 1;
- Fig. 7 und Fig. 8: schematische Darstellungen einer Ausführungsform eines erfindungsgemäß einsetzbaren Gummi- oder Kautschuckprofils in verschiedenen Konfigurationen
- Fig. 9: eine schematische Darstellung, in welcher Weise ein oder mehrere Knick(e) in einen herzustellenden Gegenstand eingebracht werden kann/können; und
- Fig. 10: eine schematische Darstellung, in welcher Weise eine oder mehrere Sollbruchstelle(n) in einen herzustellenden Gegenstand eingebracht werden kann/können.

In der nachfolgenden Beschreibung werden für gleiche und gleich wirkende Teile dieselben Bezugsziffern verwendet.

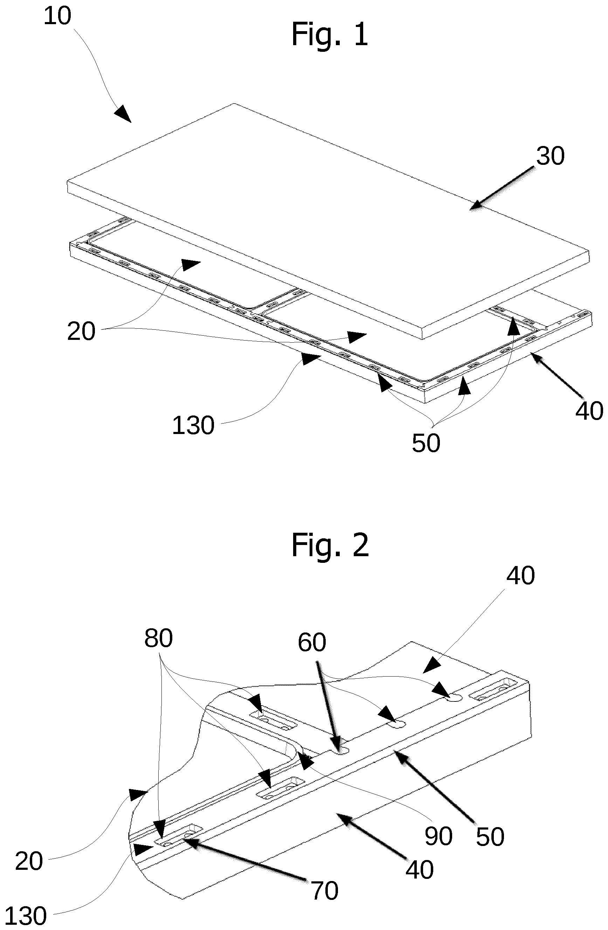

Fig. 1 zeigt eine schematische Darstellung einer Form 10 gemäß einer ersten Ausführungsform der Erfindung. Die Form 10 umfasst ein erstes in Fig. 1 oben liegend dargestelltes Formteil 30 sowie ein zweites in Fig. 1 unten liegend dargestelltes Formteil 40, an welchem Verbindungsformteile 50 zu einem Rahmen 130 zusammengefügt befestigt sind. Der aus den Verbindungsformteilen 50 gebildete Rahmen 130 ist auf dem zweiten Formteil 40 angeordnet und so ausgebildet, dass bei einem Absenken des ersten Formteils 30 auf den aus den Verbindungsformteilen 50 gebildeten Rahmen 130 zwei Hohlräume 20 gebildet werden, die zur Aufnahme von gieß- und/oder spritzbarem Material und mithin zur Herstellung von Formkörpern aus einem solchen Material geeignet sind.

Die Fig. 2 bis Fig. 5 zeigen jeweils schematische Darstellungen von Detailvergrößerungen der in Fig. 1 dargestellten erfindungsgemäßen Ausführungsform, wobei Fig. 2 einen Ausschnitt eines zweiten Formteils 40 zeigt, auf welchem Verbindungsformteile 50 mittels einer Puzzleverbindung 60 zusammengefügt sind. Die Verbindungsformteile 50 bilden gemeinsam einen Rahmen 130, der in Richtung eines Hohlraums 20, der als Matrizenraum dient, ein Gummiprofil 90 aufweist.

Des Weiteren ist in Fig. 2 gezeigt, dass die Verbindungsformteile 50 Ausnehmungen 80 aufweisen, die jeweils zur Aufnahme eines Magneten geeignet sind, der dazu dient, die Verbindungsformteile 50 auf dem magnetisch ausgebildeten zweiten Formteil 40 zu fixieren. Wie in Fig. 2 ferner gezeigt ist, weisen die Verbindungsformteile 50 zahlreiche Puzzleverbindungsausnehmungen auf, so dass die einzelnen Verbindungsformteile 50 zueinander unterschiedlich angeordnet, formschlüssig miteinander verbunden und magnetisch auf dem ersten Formteil 40 fixiert werden können.

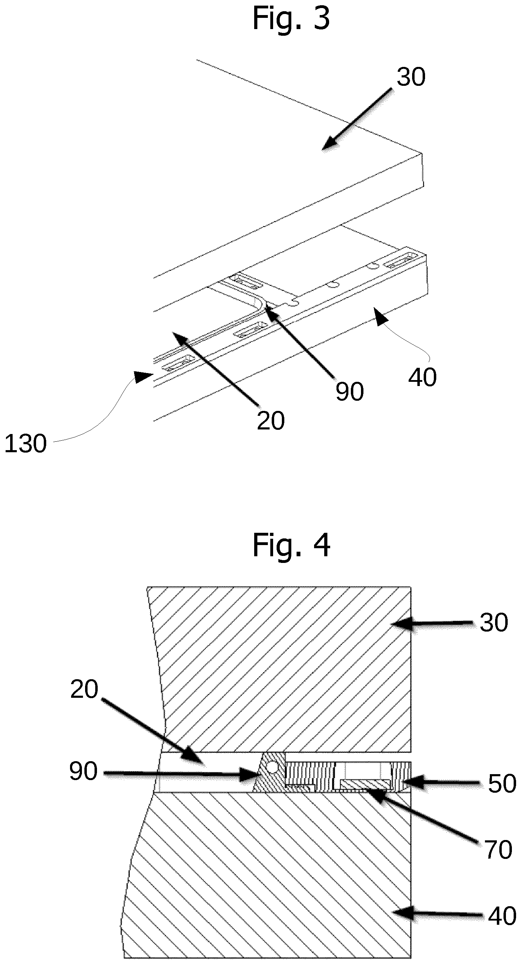

Fig. 3 zeigt im Wesentlichen denselben Abschnitt der erfindungsgemäßen Form wie Fig. 2, nämlich das zweite Formteil 40, auf welchem der aus Verbindungsformteilen 50 zusammengesetzte Rahmen 130 angeordnet ist, wobei einem Hohlraum 20 zugewandt innerhalb des Rahmens 130 ein Gummi- oder Kautschuckprofil angeordnet ist. Ferner zeigt Fig. 3 in schematischer Ansicht, in welcher Weise das erste Formteil 30 auf den Rahmen 130 abgesenkt und in Folge aufgesetzt wird.

Die beiden Fig. 4 und Fig. 5 zeigen in vergrößerter Darstellung, in welcher Weise das Gummi- oder Kautschuckprofil 90 an dem Verbindungsformteil 50 angeordnet und das Verbindungsformteil 50 seinerseits an dem zweiten Formteil 40 mittels Magnet 70 fixiert ist. Der Magnet 70 ist hierbei in einer Ausnehmung 80 des Verbindungsformteils 50 angeordnet. Das Verbindungsformteil 50 weist ferner eine Unterschneidung auf, in die eine Lasche, respektive Leiste 100 des Gummi- oder Kautschuckprofils 90 eingreift. Die Lasche 100 weist ihrerseits an ihrer Oberseite, die dem Verbindungsformteil 50 zugewandt ist, einen Bereich mit erhöhter Reibung, nämlich in Form einer Zahnung 110, auf. Das Gummi- oder Kautschuckprofil 90 weist auf seiner dem als Matrizenraum dienenden Hohlraum 20 zugewandten Seite eine Verjüngung in Form einer Abschrägung auf, die den Hohlraum 20 in Richtung des ersten Formteils 30 erweitert, so dass ein fertig hergestelltes Produkt leicht aus der erfindungsgemäßen Form 10 entnommen werden kann, wenn das erste Formteil 30 zum Öffnen der Form 10 von dem Rahmen 130 abgenommen ist.

Fig. 6 zeigt eine schematische Darstellung einer Funktionsweise der erfindungsgemäßen Ausführungsform gemäß Fig. 1, wobei die in Fig. 6 dargestellten dicken Pfeile symbolisieren an welchen Stellen die Hohlräume 20 mit einem gieß- und/oder spritzbaren Material gefüllt werden können. Die beiden aufwärtsgerichteten Pfeile symbolisieren, in welcher Weise bzw. Richtung das erste Formteil 30 zum Öffnen der Form 10 von dem Rahmen 130 abgenommen werden kann.

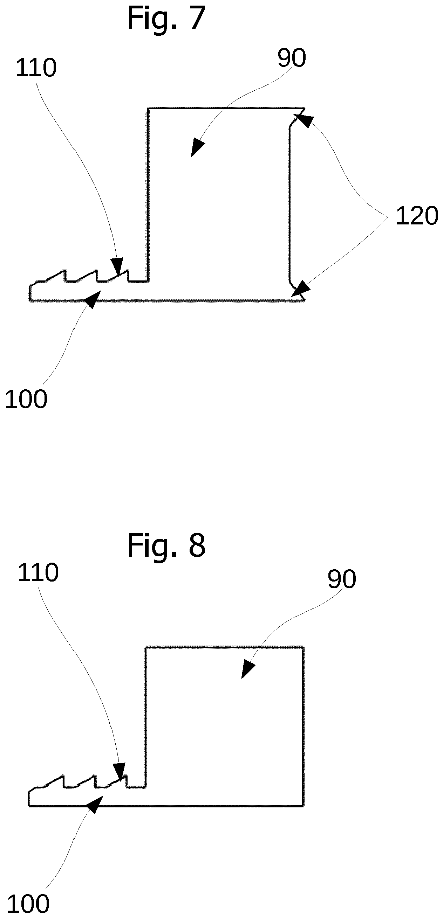

Die Fig. 7 und Fig. 8 zeigen schematische Darstellungen einer Ausführungsform eines erfindungsgemäß einsetzbaren Gummi- oder Kautschuckprofils in verschiedenen Konfigurationen. Hierbei zeigt Fig. 7 ein Gummi- oder Kautschuckprofil 90, das auf seiner produktzugewandten Seite, d. h. auf der dem Hohlraum 20 zugewandten Seite, eine Profilierung 120 aufweist, die im Zuge eines Schließens der erfindungsgemäßen Form 10 geglättet wird, wobei das Gummi- oder Kautschuckprofil 90 zu der in Fig. 8 dargestellten Konfiguration gestaucht und auf diese Weise komprimiert, respektive gespannt, wird. Bei einem Öffnen der erfindungsgemäßen Form 10 nimmt das Gummi- oder Kautschuckprofil 90 wieder seine ursprüngliche profilierte Konfiguration gemäß Fig. 7 ein. Des Weiteren ist in den Fig. 7 und Fig. 8 die Lasche 100 des Gummi- oder Kautschuckprofils 90 gezeigt, die eine nach oben gerichtete Zahnung 110 aufweist, die ein Verrutschen des Gummi- oder Kautschuckprofils 90 in seiner Anordnung an dem Rahmen 130, respektive unter einem Verbindungsabschnitt des Verbindungsformteils 50, auch dann vermeidet, wenn die erfindungsgemäße Form 10 gefüllt oder der hergestellte Gegenstand aus der erfindungsgemäßen Form 10 entformt wird.

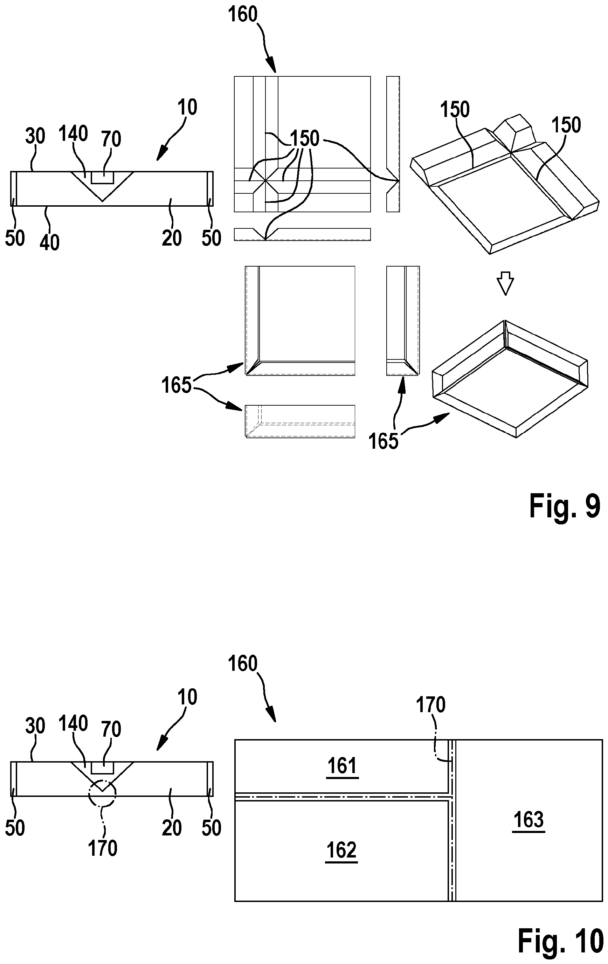

Fig. 9 zeigt eine schematische Darstellung, in welcher Weise ein oder mehrere Knick(e) 150 in einen herzustellenden Gegenstand 160 eingebracht werden kann/können, wobei die Knicke 150, die in Form von V-förmigen Nuten ausgebildet sind, anschließend genutzt werden können, um den hergestellten Gegenstand an diesen Knickstellen zu biegen oder zu falten, um auf diese Weise ein dreidimensionales, beispielsweise kastenförmiges, Produkt, herstellen zu können. In Fig. 9 ist zu diesem Zweck eine Form 10 mit einem Hohlraum 20 gezeigt, wobei der Hohlraum 20 durch ein oben liegendes erstes Formteil 30, ein unten liegendes zweites Formteil 40 und seitlich angeordnete Verbindungsformteile 50, die seitliche Begrenzungen des Hohlraums 20 der Form 10 darstellen, gebildet ist. An dem oben liegenden ersten Formteil 30 ist eine Einlagevorrichtung 140 angeordnet, die einen dreieckigen Querschnitt hat, dessen Basis an dem ersten Formteil 30 anliegt und dort mit einem Magneten 70 gehalten bzw. auf diese Weise an dem ersten Formteil 30 befestigt ist. Bei einem erfindungsgemäßen Befüllen der Form 10 mit einem gieß- und/oder spritzbaren Material wird der gesamte Hohlraum 20 der Form 10 gefüllt, wobei die Einlagevorrichtung 140 als Platzhalter für einen im fertigen Gegenstand 160 daraus hergestellten V-förmigen Knick 150 dient. Indem der hergestellte Gegenstand 160 entlang eines solchen Knicks gebogen oder gefaltet wird, ist es in vorteilhafter Weise möglich, ein Produkt 165 in Form eines gefalteten oder geknickten Gegenstands 160 zu erzeugen, das beispielsweise eine dreidimensionale oder kastenförmige Geometrie hat. Um ein solches Knicken des hergestellten Gegenstands 160 zu ermöglichen, erstrecken sich die jeweils erzeugten Knicke 150 über einen Bereich von 80 % bis 99 %, bevorzugt 85 % bis 97 % und besonders bevorzugt 90 % bis 95 % der Dicke des herzustellenden Gegenstands, wodurch eine Art Filmscharnier erzeugt wird.

Fig. 10 zeigt eine schematische Darstellung, in welcher Weise eine oder mehrere Sollbruchstelle(n) in einem herzustellenden Gegenstand 160 erzeugt werden kann/können. Zu diesem Zweck wird eine Form analog zu der in Fig. 9 beschriebenen Form verwendet, um V-förmige Nuten zu erzeugen, welche die späteren Sollbruchstellen 170 darstellen. Auf diese Weise kann ein Gegenstand 160 durch simples Brechen beispielsweise in einen Teilgegenstand 1 161, einen Teilgegenstand 2 162 und in einen Teilgegenstand 3 163 zerteilt werden, ohne dass hierfür ein Schneid-, Säge- oder Fräswerkzeug notwendig wären.

Sowohl in Fig. 9 als auch in Fig. 10 ist jeweils im linken Teil der Figur das Formenwerkzeug, respektive die Form 10 mit der verwendeten Einlagevorrichtung 140 und dem die Einlagevorrichtung 140 fixierenden Magneten 70 dargestellt. Der Magnet 70 ist jeweils integral mit der Einlagevorrichtung 140 ausgebildet, so dass eine glatte Anlage der jeweiligen Einlagevorrichtung 140 an dem ersten Formteil 30 möglich ist. Im jeweiligen rechten Teil von Fig. 9 und Fig. 10 ist der jeweilige mit der im linken Bereich dargestellten Form hergestellte Gegenstand 160 gezeigt und dessen mögliche weitere Verwendung skizziert.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Form
- 20: Hohlraum
- 30: erstes Formteil
- 40: zweites Formteil
- 50: Verbindungsformteil
- 60: Puzzleverbindung
- 70: Magnet
- 80: Ausnehmung
- 90: Dichtprofil, Gummi- oder Kautschuckprofil
- 100: Lasche oder Leiste
- 110: Bereich mit erhöhter Reibung, Zahnung
- 120: Profilierung
- 130: Rahmen
- 140: Einlagevorrichtung
- 150: Knick
- 160: Gegenstand
- 161: Teilgegenstand 1
- 162: Teilgegenstand 2
- 163: Teilgegenstand 3
- 165: Produkt = gefalteter Gegenstand
- 170: Sollbruchstelle

## Patentansprüche

1. Form (10) zur Herstellung von Formkörpern aus einem gieß- und/oder spritzbaren Material,
**dadurch gekennzeichnet, dass**
die Form (10) modular aufgebaut ist und zumindest einen Hohlraum (20) aufweist, der von wenigstens einem ersten Formteil (30), wenigstens einem zweiten Formteil (40), das dem ersten Formteil (30) im Wesentlichen gegenüberliegend angeordnet ist, und Verbindungsformteilen (50) begrenzt ist, wobei die Verbindungsformteile (50) zwischen dem ersten Formteil (30) und dem zweiten Formteil (40) angeordnet und relativ zueinander versetzbar sind und die Verbindungsformteile (50) und/oder ein in Richtung des Hohlraums (20) an den Verbindungsformteilen (50) angeordnetes Dichtprofil (90) einen jeweiligen Abstand zwischen dem wenigstens einen ersten Formteil (30) und dem wenigstens einen zweiten Formteil (40) definieren , wobei die Form (10) gegebenenfalls wenigstens eine, insbesondere als Platzhalter dienende, Einlagevorrichtung aufweist, die herausnehmbar an dem ersten Formteil (30) und/oder dem zweiten Formteil (30) und/oder wenigstens einen Verbindungsformteil (50) befestigbar ist.

2. Form nach Anspruch 1,
**dadurch gekennzeichnet, dass**
die Verbindungsformteile (50) miteinander einen Rahmen bilden und an dem wenigstens einen ersten Formteil (30) und/oder an dem wenigstens einen zweiten Formteil (40) lösbar fixierbar sind.

3. Form nach einem der vorhergehenden Ansprüche,
**dadurch gekennzeichnet, dass**
das erste Formteil (30) und/oder das zweite Formteil (40) ein magnetisches Material aufweisen und/oder vorzugsweise aus Metall, insbesondere aus Edelstahl, hergestellt sind.

4. Form nach einem der vorhergehenden Ansprüche,
**dadurch gekennzeichnet, dass**
die Verbindungsformteile (50) und/oder die Einlagevorrichtung eine, vorzugsweise inerte, Oberfläche, beispielsweise aus Metall, insbesondere aus Edelstahl, oder Kunststoff, insbesondere aus Polytetrafluorethylen (PTFE), aufweisen.

5. Form nach einem der vorhergehenden Ansprüche 2 bis 4,
**dadurch gekennzeichnet, dass**
die Verbindungsformteile (50) mittels Steck-, Nut- und Feder- oder Puzzleverbindungen (60), beispielsweise in Form von Schwalbenschwanzverbindungen, zu dem Rahmen zusammensetzbar sind.

6. Form nach einem der vorhergehenden Ansprüche 2 bis 5,
**dadurch gekennzeichnet, dass**
die Verbindungsformteile (50), insbesondere der Rahmen, und/oder die Einlagevorrichtung magnetisch auf dem wenigstens einen ersten Formteil (30) und/oder dem wenigstens einen zweiten Formteil (40) befestigbar sind.

7. Form nach einem der vorhergehenden Ansprüche,
**dadurch gekennzeichnet, dass**
Magnete (70) zum Befestigen der Verbindungsformteile (50) und/oder der Einlagevorrichtung(en) an dem wenigstens einen ersten Formteil (30) und/oder dem wenigstens einen zweiten Formteil (40) in Ausnehmungen (80) der Verbindungsformteile (50) und/oder der Einlagevorrichtung(en) angeordnet oder integral mit den Verbindungsformteilen (50) und/oder der/den Einlagevorrichtung(en) ausgebildet sind.

8. Form nach einem der vorhergehenden Ansprüche,
**dadurch gekennzeichnet, dass**
das wenigstens eine erste Formteil (30) und/oder das wenigstens eine zweite Formteil (40) sowie gegebenenfalls wenigstens ein Verbindungsformteil (50) und/oder wenigstens eine Einlagevorrichtung auf ihrer dem Hohlraum (20) zugewandten Seite eine polierte, geätzte, geschliffene, sandgestrahlte oder geprägte Oberfläche aufweisen.

9. Form nach einem der vorhergehenden Ansprüche,
**dadurch gekennzeichnet, dass**
das wenigstens eine erste Formteil (30) ortsfest angeordnet ist und das wenigstens eine zweite Formteil (40) zum Schließen der Form (10) in Richtung des wenigstens einen ersten Formteils (30) bewegt, insbesondere, vorzugsweise translatorisch, abgesenkt, wird.

10. Form nach einem der vorhergehenden Ansprüche,
**dadurch gekennzeichnet, dass**
das Dichtprofil (90) ein Gummi- oder Kautschuckprofil (90) ist,
das optional eine Lasche oder Leiste (100) aufweist, wobei die Lasche oder Leiste (100) in das Verbindungsformteil (50) eingreift, das Verbindungsformteil (50) unterschneidet und/oder hintergreift,
und weiter optional an wenigstens einem Kontaktabschnitt mit dem Verbindungsformteil (50), insbesondere gegenüber einem dem Hohlraum (20) zugewandten Bereich, einen Bereich mit erhöhter Reibung (110) aufweist, insbesondere aufgeraut und/oder gezahnt ist.

11. Form nach Anspruch 10,
**dadurch gekennzeichnet, dass**
das Gummi- oder Kautschuckprofil (90) hohlraumseitig eine Profilierung aufweist, insbesondere eine Verjüngung aufweist, die sich vorzugsweise in Richtung des während einer Öffnung der Form zu öffnenden ersten (30) oder zweiten Formteils (40) erstreckt.

12. Form nach einem der vorhergehenden Ansprüche 10 bis 11,
**dadurch gekennzeichnet, dass**
das Gummi- oder Kautschuckprofil (90) ein Übermaß aufweist, so dass bei einem Schließen der Form eine Kompression des Gummi- oder Kautschuckprofils (90), vorzugsweise einhergehend mit einer Expansion des Gummi- oder Kautschuckprofils (90) zumindest in Richtung des Hohlraums (20), und bei einem Öffnen der Form eine Expansion des Gummi- oder Kautschuckprofils (90) erfolgt.

13. Form nach einem der vorhergehenden Ansprüche 10 bis 12,
**dadurch gekennzeichnet, dass**
das Gummi- oder Kautschuckprofil (90) hohlraumseitig eine Profilierung aufweist, die sich unter Druck, der bei einem Schließen der Form auf das Gummi- oder Kautschuckprofil (90) ausgeübt wird, insbesondere geradlinig, glättet.

14. Form nach einem der vorhergehenden Ansprüche 10 bis 13,
**dadurch gekennzeichnet, dass**
das Gummi- oder Kautschuckprofil (90) zumindest hohlraumseitig eine gegenüber dem gieß- und/oder spritzbaren Material inerte Beschichtung, insbesondere Releasebeschichtung,
oder
reaktive Oberfläche, beispielsweise in Form einer Beschichtung oder insbesondere Haftbeschichtung,
aufweist.

15. Verwendung einer Form nach einem der vorhergehenden Ansprüche zum Herstellen von Formkörpern.
